# EUROPÄISCHE PATENTSCHRIFT

(11) **EP 3 153 830 B1**
(45) Veröffentlichungstag und Bekanntmachung des Hinweises auf die Patenterteilung: **20.06.2018**
(21) Anmeldenummer: 15188574.6
(22) Anmeldetag: 06.10.2015
(51) Int. Cl.: G01G 21/23

(54) **LASTAUFNEHMER MIT EINRASTVORRICHTUNG**
LOAD RECEIVER WITH LOCKING MEANS
SUPPORT DE CHARGE AYANT UN DISPOSITIF DE VERROUILLAGE

(43) Veröffentlichungstag der Anmeldung: 12.04.2017
(73) Patentinhaber: Mettler-Toledo GmbH, 8606 Greifensee (CH)
(72) Erfinder: Scheu, Matthias, 8627 Grüningen (CH); Balsen, Franz, 8637 Laupen (CH)
(74) Vertreter: Mettler-Toledo

(56) Entgegenhaltungen:
- EP-A1- 1 698 872
- EP-A1- 2 175 249
- EP-A1- 2 278 285
- EP-B1- 1 576 343
- GB-A- 2 157 001
- US-A- 5 033 562

## Beschreibung

Die Erfindung betrifft ein gravimetrisches Messinstrument mit einer Wägezelle die ein Lastübertragungsglied aufweist mit welchem ein Lastaufnehmer lösbar verbindbar ist.

Gravimetrische Messinstrumente dieser Art dienen beispielsweise als Waagen und Wägemodule in vielen Bereichen der Industrie, insbesondere in Laboratorien von Forschungs- und Entwicklungsabteilungen, aber auch als Wägemodule in der Produktion, beispielsweise in der Qualitätskontrolle. Wägemodule sind Waagen mit von der Wägezelle und deren Gehäuse getrennt angeordneter Anzeige und/oder Eingabeeinheit.

In der EP 1 576 343 B1 ist ein Wägemodul mit einer Wägezelle schematisch im Schnitt dargestellt. Das am Lastaufnahmebereich der Wägezelle angeordnete Lastübertragungsglied ist an seinem freien Ende kegelstumpfförmig ausgebildet. Der dargestellte Lastaufnehmer weist eine zu diesem kegelstumpfförmigen Ende passende kegelförmige Bohrung auf. Üblicherweise weisen die Kegelstümpfe dieser lösbaren Verbindungsart eine geringe Kegelverjüngung auf, so dass auch bei aussermittiger Belastung des Lastaufnehmers dieser nicht vom Lastübertragungsglied kippt. Aufgrund dieser geringen Kegelverjüngung entstehen im Bereich der Berührungsflächen ausserordentlich hohe Flächenbelastungen beziehungsweise ein hoher Lochleibungsdruck, weshalb diese Verbindungsart nur für Waagen mit niederen Lastbereichen geeignet ist, auch selbst dann, wenn die Verbindung aus Metall gefertigt ist. Ferner kann diese Verbindungsart nur dann eingesetzt werden, wenn die Ausrichtung des Lastaufnehmers zur Wägezelle, abgesehen von der Lage seines Massenschwerpunktes, keine Rolle spielt, folglich also nur bei vorhandensein von rotationssymmetrischen Lastaufnehmern beziehungsweise Waagschalen.

Aus den vorangehend genannten Gründen ist diese Verbindungsart für Wägemodule im industriellen Bereich meistens ungeeignet. Üblicherweise wird der Lastaufnehmer deshalb direkt am Lastübertragungsglied vermittels eines Gewindes festgeschraubt. Dies hat den Nachteil, dass die Montage und Demontage des Lastaufnehmers mit erheblichem Zeitaufwand verbunden ist, da der ganze Lastaufnehmer relativ zur Wägezelle gedreht werden muss. Dies ist insbesondere dann problematisch, wenn einsatzspezifische Vorrichtungen wie beispielsweise Förderbänder, Klemmvorrichtungen für Behälter und dergleichen am Lastaufnehmer befestigt sind und die Raumverhältnisse derart knapp bemessen sind, dass zuerst diese einsatzspezifischen Vorrichtungen vom Lastaufnehmer entfernt werden müssen, bevor dieser vom Lastübertragungsglied abgeschraubt werden kann. Wägemodule mit einsatzspezifischen Vorrichtungen werden oft in Abfüll- und Kontrollvorrichtungen von Produktionsanlagen zur Portionierung und Kontrolle von Massengütern eingesetzt. Oft sind solche Anlagen mehrspurig konzipiert, das heisst, dass mehrere parallel angeordnete Wägemodule sowie deren Zufuhr- und Abfuhrvorrichtungen auf engstem Raum vorhanden sind.

Eine weitere bekannte Montagevariante ist, den Lastaufnehmer beziehungsweise die Waagschale mit einer in der Mittellängsachse des Lastaufnehmers und des Lastübertragungsgliedes angeordneten Schraube am Lastübertragungsglied zu fixieren. Dadurch lässt sich zwar der Lastaufnehmer einfacher vom Lastübertragungsglied lösen ohne dass der ganze Lastaufnehmer gedreht werden muss, aber es entsteht durch das Schraubenloch im Lastaufnehmer ein Leck, welches abgedichtet werden muss. In vielen Fällen sind solche Verschraubungen aus Hygienegründen und Reinigungsgründen höchst unerwünscht, da die Schraube in einer horizontalen Fläche angeordnet ist und sich Verunreinigungen um den Schraubenkopf ansammeln können. Es versteht sich von selbst, dass gerade bei hohen Anforderungen an die Sauberkeit solcher Produktionsanlagen, beispielsweise im Lebensmittel- und Pharmabereich, die rasche Montage und Demontage des Lastaufnehmers zu Reinigungszwecken von höchster Bedeutung ist. Zudem ist bei für in diesen Anlagen eingesetzte Wägemodule gängig, dass die einsatzspezifischen Vorrichtungen auf das zu wiegende Produkt angepasst und auswechselbar ausgestaltet sind. Für eine Auswechselbarkeit ist die in der Mittellängsachse des Lastaufnehmers und des Lastübertragungsgliedes angeordnete Schraube denkbar ungeeignet, da diese von der einsatzspezifischen Vorrichtung verdeckt wird.

In der EP 2 278 285 A1 ist eine Montagevariante offenbart, welche oben genannte Montagevariante mit der in der Mittellängsachse des Lastaufnehmers und des Lastübertragungsgliedes angeordneten Schraube umgeht. Mittels eines am Lastaufnehmer und am Lastübertragungsglied angreifenden Exzenterbolzens kann der Anschlag des Lastübertragungsglieds gegen den Gegenanschlag des Lastaufnehmers gepresst werden, womit der Anschlag gegen den Gegenanschlag vorspannbar ist. Anstatt dass eine Schraube oder gar der ganze Lastaufnehmer mittels vieler Umdrehungen festgeschraubt werden muss, kann durch simples Auflegen des Lastaufnehmers auf das Lastübertragungsglied, durch das Einstecken eines Exzenterbolzens und durch die nachfolgende Drehung des Exzenterbolzens der Lastaufnehmer am Lastübertragungsglied starr fixiert werden. Nachteilig bei dieser Montagevariante ist, dass zuerst der Exzenterbolzen gelöst und entfernt werden muss um den Lastaufnehmer vom Lastübertragungsglied zu trennen, wobei das Lösen und Entfernen des Exzenterbolzen genügend Raum erfordert. Dies gilt selbstverständlich auch für den Einsatz von entsprechendem Werkzeug.

Die Aufgabe der vorliegenden Erfindung ist deshalb, ein gravimetrisches Messinstrument mit einer Wägezelle zu schaffen, an deren Lastübertragungsglied ein Lastaufnehmer auf rasche und einfache Weise fixierbar und wieder entfernbar ist. Dabei soll der für die Montage und Demontage des Lastaufnehmers benötigte Platz möglichst klein gehalten werden.

Diese Aufgabe wird durch ein gravimetrisches Messinstrument mit den Merkmalen des Anspruchs 1 gelöst. Weitere bevorzugte Ausführungsformen der Erfindung sind Bestandteil der abhängigen Ansprüche.

Ein gravimetrisches Messinstrument beinhaltet ein Gehäuse und eine Wägezelle, welche in dem Gehäuse angeordnet ist. Das gravimetrisches Messinstrument weist ein Lastübertragungsglied auf. Das Lastübertragungsglied reicht durch eine Durchführung des Gehäuses hindurch und ist mit einem Lastaufnehmer lösbar verbindbar. Die Erfindung ist dadurch gekennzeichnet, dass der Lastaufnehmer ein Befestigungselement, ein Waagschalenelement und eine Einrastvorrichtung zur lösbaren Aufnahme des Waagschalenelements am Befestigungselement aufweist. Dabei weist die Einrastvorrichtung ein Rastelement und ein bei aufgenommenem Waagschalenelement ein in das Rastelement eingreifendes Federelement auf.

Das Rastelement der Einrastvorrichtung ist im gebrauchsbereiten Zustand entweder an einer dem Befestigungselement zugewandten Seite des Waagschalenelements oder an einer im Wesentlichen zylindrischen Fläche des Befestigungselements und das Federelement der Einrastvorrichtung entsprechend gegenüberliegend an der im Wesentlichen zylindrischen Fläche des Befestigungselements oder an einer dem Befestigungselement zugewandten Seite des Waagschalenelements angeordnet.

In einer besonderen Ausführungsform umfasst das Befestigungselement ein erstes Befestigungsteil und ein vom ersten Befestigungsteil lösbares zweites Befestigungsteil. Dabei ist das erste Befestigungsteil am Lastübertragungsglied angeordnet und das Rastelement oder das Federelement an einer im Wesentlichen zylindrischen Fläche des zweiten Befestigungsteils angeordnet; oder das erste Befestigungsteil ist am Lastübertragungsglied angeordnet und das Rastelement oder das Federelement an einer im Wesentlichen zylindrischen Fläche des ersten Befestigungsteils angeordnet.

In einer Weiterbildung der Erfindung lässt sich zwischen dem ersten Befestigungsteil und dem zweiten Befestigungsteil mindestens eine Unterlagscheibe anordnen. Die Unterlagscheibe kann insbesondere aus dünner Metallfolie hergestellt sein. Mittels der mindestens einen Unterlagscheibe lässt sich der relative Abstand zwischen einer die Messkraft aufnehmende Messauflagefläche des Waagschalenelementes und einer mit dem Untergrund in Kontakt bringbare Montagefläche des gravimetrischen Messinstruments einstellen.

In einer zusätzlichen Weiterbildung der Erfindung weist das zweite Befestigungsteil mindestens zwei Langlöcher auf, welche sich über nicht verbundene Kreissegmente erstrecken und durch welche zur Befestigung des zweiten Befestigungsteils am ersten Befestigungsteil ein Befestigungsmittel hindurch geführt ist, und mittels welchen Langlöchern ein relativer Winkel zwischen dem Waagschalenelement und dem Gehäuse des gravimetrischen Messinstruments um die Längsachse des Lastübertragungsglied einstellbar ist. Dadurch kann das zweite Befestigungsteil mit einem Befestigungsmittel an das erste Befestigungsteil angebracht werden und lässt dabei noch Spielraum für eine Ausrichtung des zweiten Befestigungsteils um die Mittellängsachse des Lastübertragungsgliedes. Um diese vormals festgelegte Ausrichtung bei Aufnahme des Waagschalenelements zu bewahren weisen das Waagschalenelement und das Befestigungselement oder das Waagschalenelement und das erste Befestigungsteil des Befestigungselements oder das Waagschalenelement und das zweite Befestigungsteil des Befestigungselements zur präzisen Ausrichtung zueinander Positionierungselemente auf.

Die Präzision der Wägeresultate bekannter Wägezellen werden durch sich ändernde Temperaturen mehr oder weniger stark beeinflusst. Gerade in den Haupteinsatzgebieten der vorliegenden Erfindung können die Wägegüter stark unterschiedliche Eigentemperaturen aufweisen, wenn sie auf den Lastaufnehmer aufgelegt werden. Damit keine Wärmeübertragung vom Lastaufnehmer zur Wägezelle erfolgt, kann das Befestigungselement oder das erste Befestigungsteil des Befestigungselements und/oder das zweite Befestigungsteil des Befestigungselements ein Material mit geringer Wärmeleitfähigkeit aufweisen. Vorzugweise ist ein Teil des Befestigungselements oder des ersten Befestigungsteils des Befestigungselements oder des zweiten Befestigungsteils des Befestigungselements aus Kunststoff oder einem keramischen Material oder aus Chromstahl gefertigt.

Ein weiterer Problemkreis bei gravimetrischen Messinstrumenten sind unterschiedliche elektrische Potentiale von verschiedenen Teilen. Durch elektrostatische Aufladung kann beispielsweise das Waagschalenelement von den übrigen Teilen des gravimetrischen Messinstruments angezogen werden, was ebenfalls erhebliche Abweichungen der Messwerte von den tatsächlichen Gewichtswerten der Wägegüter verursachen kann. Um eine elektrostatische Aufladung des Waagschalenelements zu vermeiden, sind das Waagschalenelement und das Lastübertragungsglied vorzugsweise aus elektrisch leitfähigem Material gefertigt und zwischen dem Waagschalenelement und dem Lastübertragungsglied ist eine elektrisch leitfähige Verbindung angeordnet. Mit dieser Ausgestaltung kann sichergestellt werden, dass das Gehäuse des gravimetrischen Messinstruments, seine darin angeordnete Wägezelle und der Lastaufnehmer dasselbe elektrische Potential aufweisen.

In einer Weiterbildung ist das Federelement der Einrastvorrichtung zur Aufbringung von Reibungskräften und radialen Federkräften durch Verformung bei der Aufnahme in einem als Einrastnut ausgebildetem Rastelement als Ringfeder oder als Fingerfederring ausgestaltet.

Eine vorteilhafte Weiterbildung der Erfindung sieht vor, dass die Ringfeder am Befestigungselement oder am zweiten Befestigungsteil des Befestigungselements in einer auf der im Wesentlichen zylindrischen Fläche des Befestigungselements oder des ersten Befestigungsteils oder des zweiten Befestigungsteils angeordneten Ringführungsnut angeordnet ist. Zudem ist es weiter vorteilhaft die Ringführungsnut auf der durchmessergrössten im Wesentlichen zylindrischen Fläche des Befestigungselements oder des ersten Befestigungsteils oder des zweiten Befestigungsteils des Befestigungselements anzuordnen. Dies erhöht die Haltekraft der Ringfeder gegenüber dem Einrastelement.

In einer weiteren vorteilhaften Weiterbildung ist die Einrastnut am Grund einer bei aufgenommenem Waagschalenelement die im Wesentlichen zylindrische Fläche des Befestigungselements oder die im Wesentlichen zylindrische Fläche des ersten Befestigungsteils des Befestigungselements oder des des zweiten Befestigungsteils des Befestigungselements umgebende Vertiefung des Waagschalenelements als radiale Innennut oder als eine den Durchmesser der Vertiefung verringerndes Überwindungselement ausgebildet.

Weiter kann in einer Weiterbildung der Erfindung die annähernd kreisförmige Ringfeder eine radial nach außen gerichtete Außenfläche, eine radial nach innen gerichtete Innenfläche und zwei entgegengesetzt gerichtete Seitenflächen aufweisen, wobei die Seitenflächen die Außenfläche und die Innenfläche beidseitig verbinden, und wobei die Außenfläche und/oder die Innenfläche zumindest abschnittsweise einen unterschiedlichen Durchmesser aufweisen/aufweist.

Weiter kann in einer weiteren Weiterbildung der Erfindung der annähernd kreisförmige Fingerfederring eine die im Wesentlichen zylindrische Fläche umschliessendes Blech mit Einschnitten zur verbesserten Einfederung aufweist.

Das gravimetrische Messinstrument, beziehungsweise die Waage oder das Wägemodul sind in konventioneller Weise aufgebaut. Das heisst, dass eine Wägezelle in einem Gehäuse angeordnet ist. Das Gehäuse weist eine Durchführung auf, durch welche das mit der Wägezelle verbundene Lastübertragungsglied hindurchreicht. Je nach dem Einsatzort muss das Gehäuse bestimmte Dichtigkeitsanforderungen erfüllen, damit nicht Staub und/oder Feuchtigkeit zur Wägezelle vordringen können. Da sich der Lastaufnehmer und das Gehäuse nicht berühren dürfen, ist zwischen dem Gehäuse und dem Lastaufnehmer ein berührungsfreies Dichtungssystem angeordnet. Ein solches Dichtungssystem kann vorzugsweise eine konzentrische Ringelemente umfassende Labyrinthdichtung sein. Ferner kann das Lastübertragungsglied mit einer Überlastschutzvorrichtung versehen sein. Diese Überlastschutzvorrichtung weist ein Federelement auf, dessen Federkraft leicht höher ist als die maximale auf den Lastaufnehmer auflegbare Gewichtskraft. Sobald diese Federkraft überschritten wird, erfährt das zwischen der Wägezelle und dem Lastaufnehmer angeordnete Lastübertragungsglied eine Verkürzung und der Lastaufnehmer gerät in Anlage mit dem Gehäuse, wodurch die am Lastaufnehmer angreifenden Kräfte direkt über das Gehäuse abgestützt werden.

Vorzugsweise weist der Lastaufnehmer eine plane Oberfläche auf, damit dieser auf einfache Weise gereinigt werden kann und die Wägegüter stabil aufliegen. Ferner erleichtert eine plane Oberfläche auch den Anbau einsatzspezifischer Vorrichtungen. Diese können beispielsweise mittels geeigneter Klemmvorrichtungen am Lastaufnehmer festgeklemmt werden. Selbstverständlich kann am Lastaufnehmer auch mindestens eine Montagestelle, beispielsweise eine Bohrung, die auch ein Gewinde aufweisen kann, zur Befestigung einsatzspezifischer Vorrichtungen ausgebildet sein.

Einzelheiten der erfindungsgemässen Wägezelle und des erfindungsgemässen Verfahrens zur Schrägstellungskompensation ergeben sich anhand der Beschreibung der in den Zeichnungen dargestellten Ausführungsbeispiele.

Das gravimetrische Messinstrument und dessen erfinderische Befestigung des Lastaufnehmers werden anhand der folgenden Figuren näher beschrieben, wobei gleiche Elemente mit denselben Bezugszeichen versehen sind. Es zeigen:
- Fig. 1: eine Schnittdarstellung durch ein gravimetrisches Messinstrument;
- Fig. 2: mehrere Messinstrumente in einer Mehrspuranwendung nebeneinander;
- Fig. 3: einen Lastaufnehmer verbunden mit dem Lastübertragungsglied nach einem Beispiel des Standes der Technik;
- Fig. 4: eine erste erfinderische Ausführung des Lastaufnehmers verbunden mit dem Lastübertragungsglied und einer Ringfeder als Federelement;
- Fig. 5: eine zweite erfinderische Ausführung des Lastaufnehmers verbunden mit dem Lastübertragungsglied und einer Ringfeder als Federelement;
- Fig. 6: eine Schnittdarstellung durch ein Waagschalenelement der zweiten erfindereischen Ausführung des Lastaufnehmers;
- Fig. 7: das Waagschalenelement der zweiten erfindereischen Ausführung des Lastaufnehmers aus in Fig. 6 definierter Blickrichtung A;
- Fig. 8: eine Ringfeder;
- Fig. 9: eine dreidimensionale Ansicht des zweiten Befestigungsteils.
- Fig. 10: eine dritte erfinderische Ausführung des Lastaufnehmers verbunden mit dem Lastübertragungsglied und einem Fingerfederring als Federelement;

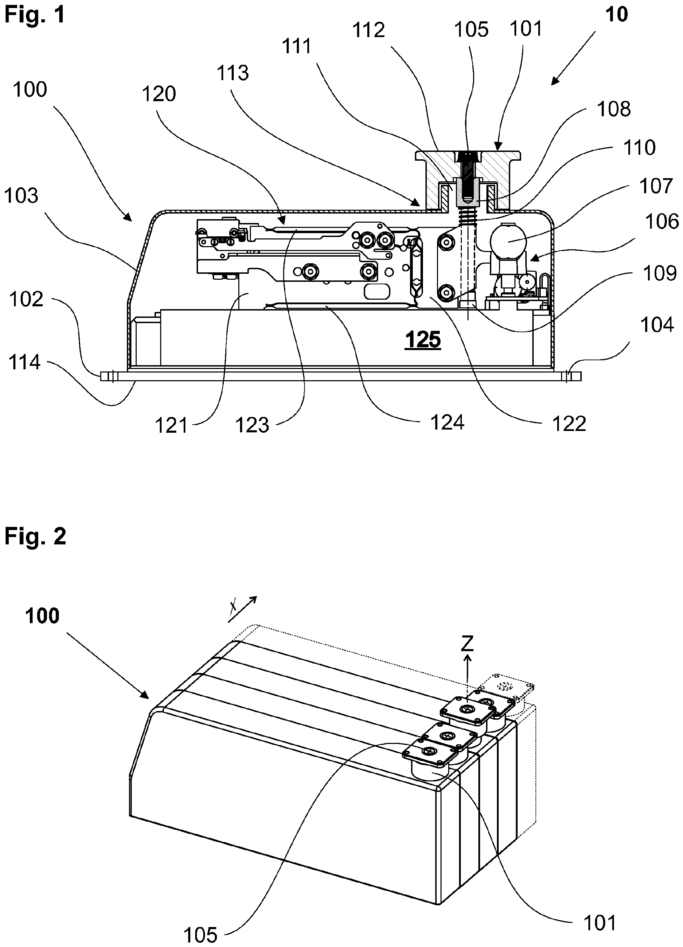

Die Schnittdarstellung der Figur 1 zeigt ein gravimetrisches Messinstrument 10 in der Ausführung eines Wägemoduls 100 mit einem Lastaufnehmer 101. Das Wägemodul 100 weist eine Grundplatte 102 und ein mit der Grundplatte 102 lösbar verbundenes Gehäuse 103 auf. Im Innern des Gehäuses 103 ist eine Wägezelle 120 angeordnet. Die Grundplatte 102 ist mit Befestigungsstellen 104 versehen, so dass das Wägemodul 100, beispielsweise in einer mehrspurigen Wägeanlage (siehe Figur 2), über die Montagefläche 114 mit einem Untergrund in Kontakt gebracht und auf dem Untergrund befestigt werden kann. Der Lastaufnehmer 101 ist mittels der Schraube 105 an einem Lastübertragungsglied 108 starr fixiert.

Weiter zeigt die Figur 1 eine im Innern des Gehäuses 103 angeordnete Wägezelle 120, welche eine Parallelführung aufweist. Die Parallelführung beinhaltet einen feststehenden Parallelschenkel 121 und einen beweglichen Parallelschenkel 122, wobei der bewegliche Parallelschenkel 122 mittels zweier Parallellenker 123, 124 mit dem feststehenden Parallelschenkel 121 verbunden ist. Der feststehende Parallelschenkel 121 ist durch einen Zwischenträger 125 an der Grundplatte 102 festgelegt.

Ferner ist eine Kalibriervorrichtung 106 auf dem Zwischenträger 125 angeordnet, dessen Kalibriergewicht 107 mit dem beweglichen Parallelschenkel 122 in Wirkverbindung gebracht werden kann.

Der bewegliche Parallelschenkel 122 ist mit einem Lastübertragungsglied 108 verbunden. Das Lastübertragungsglied 108 ist am beweglichen Parallelschenkel 122 in vertikaler Richtung linear geführt und weist einen Überlastsicherungsanschlag 109 auf. Ferner ist eine Überlastsicherungsfeder 110 zwischen dem Lastübertragungsglied 108 und dem beweglichen Parallelschenkel 122 angeordnet. Die Federkraft der Überlastsicherungsfeder 110 ist etwas höher als die maximal zulässige, auf die Messauflagefläche 112 des Lastaufnehmers 108 auflegbare Last. Sobald eine höhere Last auf den Lastaufnehmer 108 aufgelegt wird, gibt die Überlastsicherungsfeder 110 soweit nach, dass der Überlastsicherungsanschlag 109 am Zwischenträger 125 ansteht. Durch diese Überlastschutzvorrichtung kann eine mechanische Zerstörung der Wägezelle 120 vermieden werden.

Das Lastübertragungsglied 108 reicht durch eine Durchführung 111 des Gehäuses 103 hindurch, so dass an dessen, der Wägezelle 120 abgewandtem Ende der Lastaufnehmer 108 fixierbar ist. Wie der Schnitt durch den Lastaufnehmer 101 und das Gehäuse 103 zeigt, ist zwischen dem Lastaufnehmer 101 und dem Gehäuse 103 eine Labyrinthdichtung 113 ausgebildet.

Das Wägemodul 100 ist in der Tiefe, d.h. senkrecht zur Betrachtungsebene der Figur 1, relativ zu den anderen Abmassen schmal ausgestaltet. Dies ist besonders bei Ensatz in mehrspurigen Wägeanlagen und Mehrspuranlagen von enormer Bedeutung, da dieses Abmass die Breite bzw. die Anzahl möglicher Wägestellen definiert. In Figur 2 ist eine solche Anwendung gezeigt. Es lassen sich beliebig viele Wägemodule 100 nebeneinander in der Richtung X aufreihen. Die Lastaufnehmer 101 sind minimal von einander beabstandet jedoch gerade noch soweit von einander entfernt, dass diese sich im Wägebetrieb nicht gegenseitig behindern. Die nahe Anordnung erfordert aber auch eine angepasste Befestigung des Lastaufnehmers 101 am Lastübertragungsglied 108. Um einen Lastaufnehmer 101 zu demontieren muss dieser durch eine lineare Bewegung in Z-Richtung entfernt werden können. Dazu muss nach der Lösung des Standes der Technik eine Schraube 105 gelöst werden, wonach der Lastaufnehmer 101 in einfacher Weise, z.B. mit zwei Fingern vom Rest des Wägemoduls 100 in der Richtung Z abgehoben werden kann.

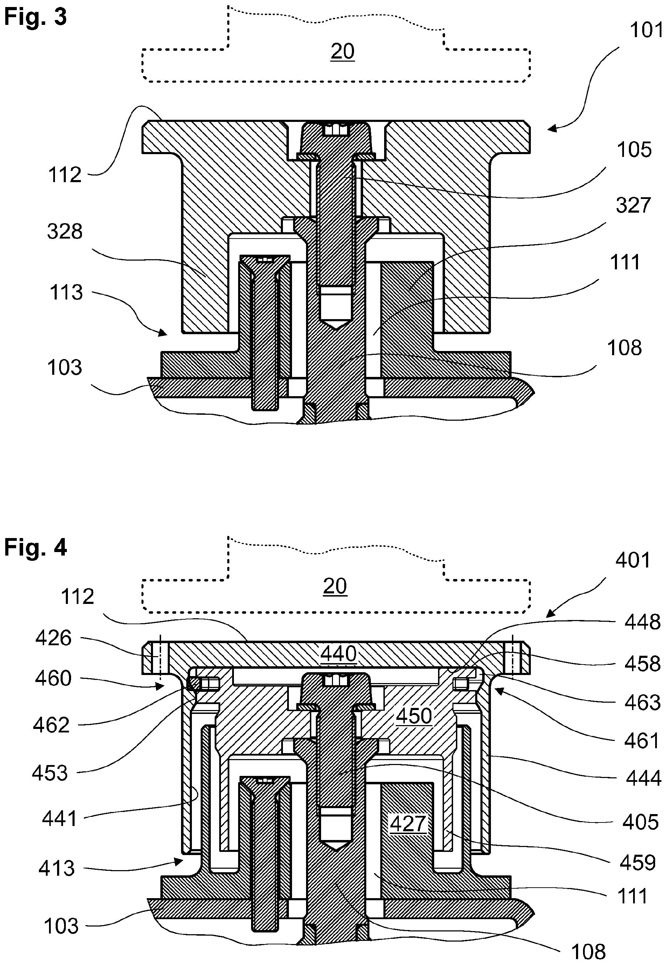

Figur 3 zeigt ein Beispiel des Standes der Technik zur Befestigung des Lastaufnehmers 101 am Lastübertragungsglied 108 welches durch eine Öffnung 111 im Gehäuse 103 hindurchreicht. Eine einzige, mittig angelegte Schraube 105 fixiert den Lastaufnehmer 101 am Lastübertragungsglied 108. Die Öffnungserhöhung 327 bildet als inneres Ringelement zusammen mit dem als zweites Ringelement 328 dienenden Lastaufnehmer 101 einen Spritzschutz gegen direktes Eindringen von Wasser, zum Beispiel bei einem Reinigungsvorgang. Ein grosser Nachteil dieser Befestigungsart ist die Tatsache, dass die Messauflagefläche 112 aufgrund der Schaube 105 nicht eben ist und sich daher Schmutz ablagern kann. Im Falle der Verwendung von einsatzspezifischen Vorrichtungen 20 wird die Schraube 105 unzugänglich und es muss die einsatzspezifische Vorrichtung 20 vorab demontiert werden um an die Schraube 105 zu gelangen. Eine Neumontage der einsatzspezifischen Vorrichtung 20 könnte es Erfordern, dass diese einer neuen Justierung bedarf und dadurch zeitaufwändig ist.

Eine erste Ausführungsvariante des Lastaufnehmers 401 nach erfinderischer Lösung ist in Figur 4 gezeigt. Der Lastaufnehmer 401 ist dabei in ein Waagschalenelement 440 und ein Befestigungselement 450 geteilt, wobei das Befestigungselement 450 mittels der Schraube 405 am Lastübertragungsglied 108 festgemacht ist. Das Waagschalenelement 440 ist zur lösbaren Aufnahme mittels einer Einrastvorrichtung 460 am Befestigungselement 450 festgelegt. Die Einrastvorrichtung 460 weist ein Rastelement 461 am Waagschalenelement 440 auf in welches ein Federelement 462 eingreift, wenn das Waagschalenelement 440 auf dem Befestigungselement 450 aufgenommenem ist. Das Federelement 462 fixiert das Waagschalenelement 440 auf dem Befestigungselement 450 so, dass die Anschlagsfläche 458 gegen die Gegenanschlagsfläche 448 des Waagschalenelementes 440 gedrückt wird.

Eine einsatzspezifische Vorrichtung 20 kann am Waagschalenelement 440 mittels der Montagestellen 426 montiert werden. Zur Demontage der mit dem Lastaufnehmer 401 bzw. dem Waagschalenelement 440 verbundenen einsatzspezifischen Vorrichtung 20 muss bei der erfinderischen Lösung lediglich das Waagschalenelement 440 entfernt bzw. vom Befestigungselement 450 abgehoben werden.

Das Befestigungselement 450 sowie das Waagschalenelement 440 bilden durch deren Ringelemente 444, 459 zusammen mit der Öffnungserhöhung 427 eine aus mehreren Ringelementen bestehende Labyrinthdichtung 413.

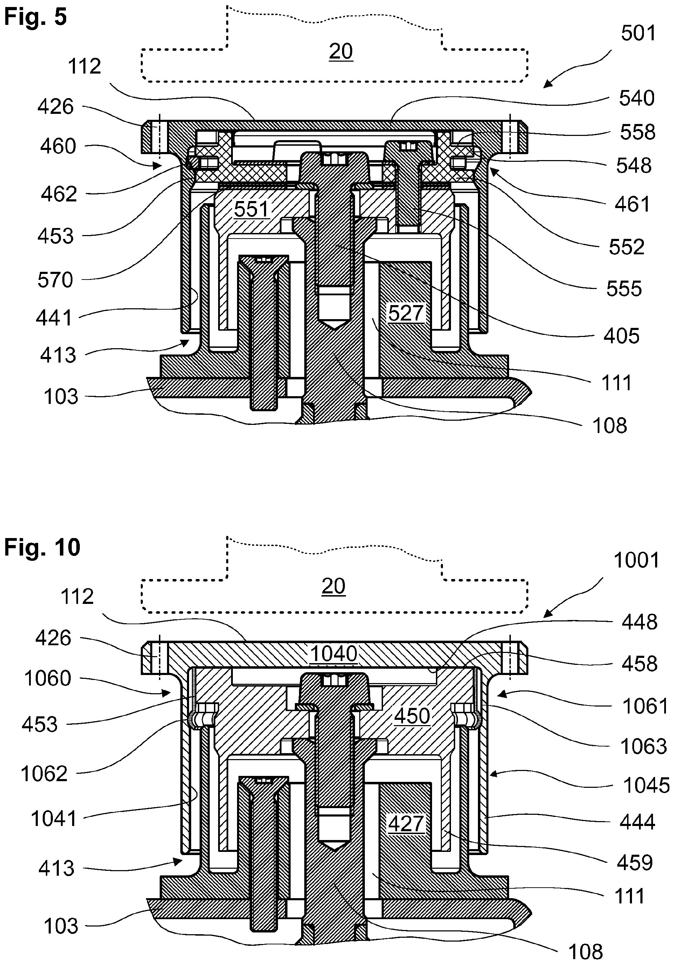

Die zweite Ausführungsvariante des Lastaufnehmers 501 nach erfinderischer Lösung ist in Figur 5 gezeigt. Das Befestigungselement 450 (nicht gezeigt) ist hier in ein erstes Befestigungsteil 551 und ein zweites Befestigungsteil 552 unterteilt. Das erste Befestigungsteil 551 ist mittels einer Schraube 405 am Lastübertragungsglied 108 angebracht. Das zweite Befestigungsteil 552 wiederum ist am ersten Befestigungsteil 551 mittels der Schraube 555 festgelegt. Dazwischenliegend sind Unterlagscheiben 570 zur Höheneinstellung vorgesehen. Durch die Wahl der Dicke einer oder mehreren dieser aus Metallfolie bestehenden Unterlagscheiben 570 lässt sich der Abstand zwischen der die Messkraft aufnehmende Messauflagefläche 112 des Waagschalenelementes 540 und einer mit dem Untergrund in Kontakt bringbare Montagefläche 114 (in Figur 1 gezeigt) des gravimetrischen Messinstruments 10 einstellen.

Durch die Unterteilung des Befestigungselements 450 (siehe Figur 4) in ein erstes Befestigungsteil 551 und ein zweites Befestigungsteil 552 ergeben sich mehr Möglichkeiten betreffend die Materialwahl. So kann zum Beispiel das erste Befestigungsteil 551 und/oder das zweite Befestigungsteil 552 ein Material mit geringer Wärmeleitfähigkeit aufweisen, um zu Verhindern, dass eine Wärmeübertragung vom Lastaufnehmer zur Wägezelle erfolgt. Insbesondere eignen sich dafür Kunststoffe oder keramisches Material sowie Chromstahl. Eine andere Möglichkeit der Materialwahl berücksichtigt die Tatsache, dass verschiedene Teile unterschiedliche elektrische Potentiale aufweisen können. Durch elektrostatische Aufladung kann beispielsweise der Lastaufnehmer 501 von den übrigen Teilen des gravimetrischen Messinstruments angezogen werden, was erhebliche Abweichungen der Messwerte von den tatsächlichen Gewichtswerten der Wägegüter verursachen kann. Um eine elektrostatische Aufladung des Lastaufnehmers 501 zu vermeiden besteht das Waagschalenelement 540 aus einem elektrisch leitfähigem Material und zwischen der Wägezelle und dem Lastaufnehmer 501 besteht eine elektrisch leitfähige Verbindung um die Potentiale auszugleichen. Als Beispiel sei hier die Konstellation erwähnt, in welcher das Befestigungselement 450 aus einem nichtleitenden Material besteht und die elektrische Verbindung zwischen dem Waagschalenelement 540 und der Schraube 405 mittels einer Leitpaste zustande kommt.

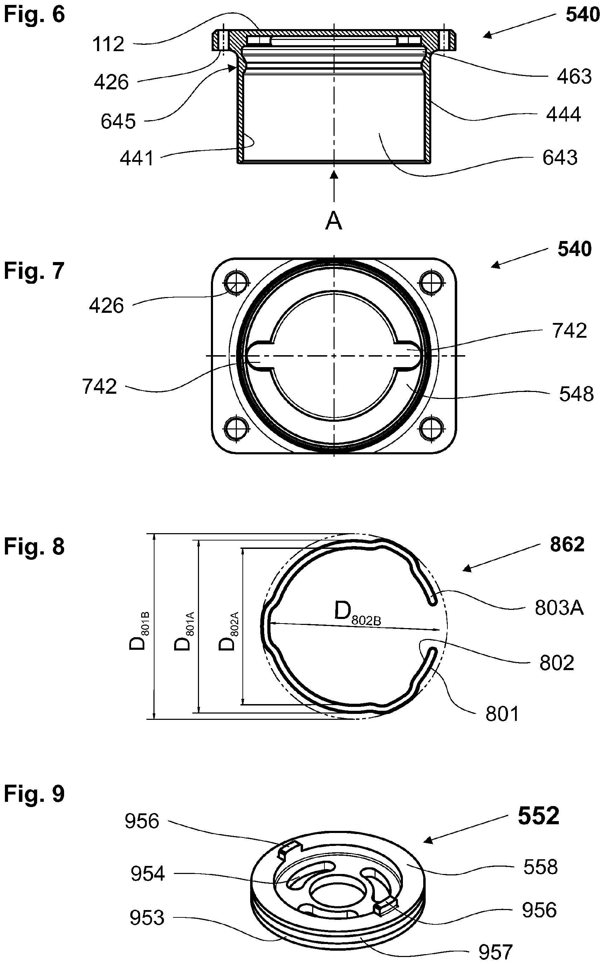

In Figur 6 ist allein das Waagschalenelement 540 aus Figur 5 in einer Schnittdarstellung gezeigt. Mittels der Montagestellen 426 kann eine einsatzspezifische Vorrichtung 20 (siehe Figuren 3, 4 und 5) auf die Messauflagefläche 112 montiert werden. Das Ringelement 444 bildet eine Vertiefung 643 mit einer innenliegenden Seite 441. Am Grund der Vertiefung 643 befindet sich eine als radiale Innennut ausgebildete Einrastnut 463. Die Innennut wird entweder durch eine den Innendurchmesser der Vertiefung 643 verjüngendes Überwindungselement 645 gebildet oder durch eine Hinterschneidung der innenliegenden Seite 441.

Im Folgenden wird das Aufbringen des Waagschalenelements 440 am Befestigungselement 450 sowie das Aufbringen des Waagschalenelements 540 am ersten Befestigungsteil 551 bzw. zweiten Befestigungsteil 552 beschrieben, d.h. der Vorgang des Aufbringens ist für die in Figur 4 und Figur 5 gezeigten Ausführungen beidermassen relevant. Bei dem erwähnten Vorgang des Aufbringens wird das Waagschalenelement 440, 540 über das Federelement 462 geschoben wodurch dieses leicht zusammengedrückt wird. Mit relativ geringem Kraftaufwand lässt sich das Waagschalenelement 440, 540 soweit über das Federelement 462 schieben bis sich das Überwindungselement 645 des Waagschalenelement 440, 540 und das Federelement 462 berühren. Ab dem Moment erfordert das Aufbringen des Waagschalenelements 440, 540 einen erhöhten Kraftaufwand. Dabei wird der Aussendurchmesser (siehe D_{801B} in Figur 8) des Federelements 462 soweit verringert bis das Federelement 462 über das Überwindungselement 645 geschoben werden kann. An der durchmesserkleinsten Stelle ist die Verformung des Federelements 462 und somit die Speicherung der radialen Federkraft am grössten. Da sich hinter dem Überwindungselement 645 der Innendurchmesser der Vertiefung 643 wieder stetig vergrössert bewirkt die gespeicherte Federkraft eine ebenso stetige Rückverformung des Federelements 462. Durch entsprechend gewählte Abmasse - unter Berücksichtigung der Fertigungstoleranzen und der Dicketoleranz des Federelements 462 - entsteht eine lösbare formschlüssige und spielfreie Verbindung.

Das in Figur 7 gezeigte Waagschalenelement 540 ist eine Ansicht aus der in Figur 6 eingezeichneten Richtung A. Darin gut erkennbar ist die Gegenanschlagsfläche 548 der Vertiefung 463 (siehe Figur 6) mit jeweils auf 3- und 9-Uhr angebrachten Positionierungselementen 742. Diese Positionierungselemente 742 können mit den entsprechenden Gegenstücken am Befestigungselement 450 oder am zweiten Befestigungsteil 552 in Eingriff gebracht werden. Zusammen mit dem Kontakt von Anschlagsfläche 558 und Gegenanschlagsfläche 548 ist das Waagschalenelement 540 bei jeder Montage auf einfachste Art und Weise repositionierbar, d.h. gleich zu montieren wie das Waagschalenelement 540 vor der Demontage angebracht war.

In einer vorteilhaften Auslegung der Geometrien der zusammenwirkenden Teile verbleibt am Federelement 462 eine Verformung bei ganz aufgesetztem Waagschalenelement 440, 540 bestehen, wodurch das Federelement 462 das Waagschalenelement 440, 540 auf dem Befestigungselement 450 oder dem zweiten Befestigungsteil 552 fixiert wird und dabei kein Spiel aufweist. Das Federelement 462 fixiert das Waagschalenelement 440, 540 auf dem Befestigungselement 450 beziehungsweise auf dem zweiten Befestigungsteil 552 so, dass die Anschlagsfläche 458 des Befestigungselements 450 oder die Anschlagsfläche 558 des zweiten Befestigungsteils 552 gegen die Gegenanschlagsfläche 448, 548 der Vertiefung 643 des Waagschalenelementes 440, 540 gedrückt wird.

Das in Figur 5 gezeigte Waagschalenelement 540 entspricht in den wesentlichen Punkten jenem Waagschalenelement 440 in Figur 4. Einziger Unterschied ist das Vorhandensein von Positionierungselementen 742 und damit verbunden eine unterbrochene Gegenanschlagsfläche 548. Selbstverständlich sind solche Positionierungselemente auch am Waagschalenelement 440 wie es die Figur 4 zeigt möglich. Diese wären demnach mit Positionierungselementen des Befestigungselementes 450 im Eingriff und bewirkten ebenfalls eine Repositionierung auf einfachste Art und Weise.

Figur 8 zeigt als Ausführungsform eines Federelementes 462 eine Ringfeder 862 wie sie z.B. in einer Ringführungsnut 954 (siehe Figur 9) angeordnet werden kann. Die Ringfeder 862 in Figur 8 weist eine radial nach außen gerichtete Aussenfläche 801, eine radial nach innen gerichtete Innenfläche 802 und zwei entgegengesetzt gerichtete Seitenflächen 803A, 803B (nicht sichtbar) auf, wobei die Seitenflächen 803A, 803B die Aussenfläche 801 und die Innenfläche 802 beidseitig verbinden. Dies ergibt einen rechteckförmigen Querschnitt der Ringfeder 862. Es sind allerdings auch Ringfedern einsetzbar, welche einen runden Querschnitt aufweisen. Aus Sicht des Betrachters der Figur 8, ist die Ringfeder 862 annähernd kreisförmig, d.h. dass die Aussenfläche 801 und die Innenfläche 802 zumindest abschnittsweise einen unterschiedlichen Durchmesser D_{801A}, D_{801B}, D_{802A}, D_{802B} aufweisen.

Eine dreidimensionale Ansicht des zweiten Befestigungsteils 552 zeigt die Figur 9. Mittels der Langlöcher 954, in der gezeigten Ausführung deren drei, wird zur Befestigung des zweiten Befestigungsteils 552 am ersten Befestigungsteil 551 ein Befestigungsmittel 555 hindurch geführt (siehe Figur 5). Das Loch in der Mitte dient dem Zugang zur Schraube 405 wie in Figur 5 gezeigt. Auf der Anschlagsfläche 558 des zweiten Befestigungsteils 552 sind die Positionierungselemente 742 zu erkennen, welche im Zusammenspiel mit den Positionierungselementen 956 des Waagschalenelements 540 eine Verdrehung des Waagschalenelements 540 verhindern. Damit das Moment dieser Verdrehung nicht die Wägezelle 120 erreicht und diese beschädigen kann, kann ein Überlastschutz vorgesehen sein. Auf der im Wesentlichen zylindrischen Fläche 953 ist eine Ringführungsnut 957 angeordnet, welche zur Aufnahme des Federelements, wie zum Beispiel der in Figur 8 gezeigten Ringfeder 862, dient.

Anstelle der Ringfeder 862 könnte alternativ auch ein federndes Blech als Fingerfederelement 1062 umlaufend die im Wesentlichen zylindrische Fläche 453 am Befestigungselement 450, wie dies in Figur 10 gezeigt ist, beziehungsweise am Befestigungsteil 551, 552 angebracht werden. Beim Aufsetzten des Waagschalenelementes 1040 wird das Fingerfederelement 1062 in dessen Durchmesser verkleinert. Eine Unterteilung des umlaufenden Bleches durch Einschnitte ergeben die Finger des Fingerfederelementes 1062, welches dadurch eine verbesserte Einfederung gegenüber einem nicht unterteiltem Blech aufweist. Zu Beginn des Aufsetztens des Waagschalenelements 1040 dient die Wandstärke des Ringelements 444 als Überwindungselement 1045. Gegen die Bodenfläche der Vertiefung 643 hin ist die Wandstärke des Ringelements 444 dünner bzw. die Innenfläche 441 der Vertiefung 643 hinterschnitten. Bei voll aufgesetztem Waagschalenelement 1040 greift dann das Fingerfederelement 1062 in das Rastelement 1061 ein. Der Fingerfederring 1062 ist gegenüber der Ringfeder 862 als gleichwertige Alternative aufzufassen, wodurch der Fingerfederring 1062 auch in der in Figur 5 gezeigten Ausführung als Federelement 462 mit den entsprechenden Anpassungen dienen kann.

Alternativ zu den in den Figuren 4 und 5 gezeigten Ausführungen sind weitere mögliche Ausführungen denkbar bei denen ein Federelement in ein Rastelement eingreift oder ein zusätzliches Element gedrückt von einem Federelement in ein Rastelement eingreift. Zum Beispiel könnte eine kleine Kugel mittels einer Druckfeder oder einer Spiralfeder in eine am Waagschalenelement vorhandene umlaufende Kerbe gedrückt werden oder in eine Vertiefung um zusätzlich eine Positionierung des Waagschalenelementes zu erreichen.

Vom erfinderischen Gedanken sind Ausführungen miterfasst bei welchen die Einrastvorrichtung zwischen dem Waagschalenelement 440, 540, 1040 und dem ersten Befestigungsteil 551 angeordnet ist. Dabei würde, ausgehend von Figur 5, das erste Befestigungsteil 551 eine soweit dickere Ausgestaltung des Teilkörpers zwischen Lastübertragungsglied 108 und Schraube 405 aufweisen, damit das Federelement 462 an der zum Waagschalenelement 540 gerichteten Fläche des ersten Befestigungsteil 551 oberhalb des Ringelements der Öffnungserhöhung 527 angeordnet werden kann. Das zweite Befestigungsteil 552 würde demnach noch die Funktion der Höhenanpassung und der Positionierung bzw. Ausrichtung des Waagschalenelementes 540 übernehmen.

Ebenfalls vom erfinderischen Gedanken miterfasst, jedoch in den Figuren nicht gezeigt sind jene Ausführungen bei welchen das Federelement am Waagschalenelement und das Rastelement am Befetigungselement bzw. dem ersten Befestigungsteil bzw. dem zweiten Befestigungsteil angeordnet ist. Diese Ausführungen sind lediglich eine Vertauschung der zusammenwirkenden Elemente der Einrastvorrichtung und deshalb im Sinne dieser Erfindung gleichwertig.

Natürlich kann die hier gezeigte Wägezelle des Wägemoduls oder des gravimetrischen Messinstruments auch ein anderes Prinzip zur Gewichtskraftbestimmung nutzen als die in den Zeichnungen dargestellte EMFR-Wägezelle (Electro-Magnetic Force Restauration). Zum Beispiel sind Dehnmessstreifen-Wägezellen, Saiten-Wägezellen oder Wägezellen nach dem Piezoprinzip arbeitend möglich.

### Liste der Bezugszeichen

- 10: Gravimetrisches Messinstrument
- 20: einsatzspezifische Vorrichtung
- 100: Wägemodul
- 101, 401, 501, 1001: Lastaufnehmer
- 102: Grundplatte
- 103: Gehäuse
- 104: Befestigungsstelle
- 105, 405: Schraube
- 106: Kalibriereinheit
- 107: Überlastschutz
- 108: Lastübertragungsglied
- 109: Überlastsicherungsanschlag
- 110: Überlastsicherungsfeder
- 111: Durchführung
- 112: Messauflagefläche
- 113, 413: berührungsfreies Dichtsystem, Labyrinthdichtung
- 114: Montagefläche
- 120: Wägezelle
- 121: feststehender Parallelschenkel
- 122: beweglicher Parallelschenkel
- 123, 124: Parallellenker
- 125: Zwischenträger
- 426: Montagestelle für einsatzspezifische Vorrichtungen
- 327, 427, 527: Öffnungserhöhung
- 328: Ringelement des Lastaufnehmers
- 440, 550, 1040: Waagschalenelement
- 44, 1041: Seite des Waagschalenelements
- 742: Positionierungselement des Waagschalenelements
- 643: Vertiefung
- 444: Ringelement des Waagschalenelements
- 645, 1045: Überwindungselement
- 448, 548: Gegenanschlagsfläche
- 450: Befestigungselement
- 551: erstes Befestigungsteil
- 552: zweites Befestigungsteil
- 453, 953: Fläche
- 954: Langloch
- 555: Befestigungsmittel
- 956: Positionierungselemente des zweiten Befestigungsteils
- 957: Ringführungsnut
- 458, 558: Anschlagsfläche
- 459: Ringelement des Befestigungselements
- 460, 1060: Einrastvorrichtung
- 461, 1061: Rastelement
- 462: Federelement
- 463, 1063: Einrastnut
- 570: Unterlagscheibe
- 862: Ringfeder
- 801: Aussenfläche
- 802: Innenfläche
- 803A, 803B: Seitenfläche
- D_{801A}, D_{801B}: Durchmesser der Aussenfläche
- D_{802A}, D_{802B}: Durchmesser der Innenfläche
- 1062: Fingerfederring
- A: Ansichtsrichtung der Figur 7
- X: Richtung der Aufreihung mehrerer Wägemodule
- Z: Abheberichtung

## Patentansprüche

1. Gravimetrisches Messinstrument (10) mit einem Gehäuse (103) und einer Wägezelle (120), welche in dem Gehäuse (103) angeordnet ist, wobei das gravimetrische Messinstrument (10) ferner ein Lastübertragungsglied (108) aufweist, welches durch eine Durchführung (111) des Gehäuses (103) hindurchreicht und mit dem ein Lastaufnehmer (401, 501, 1001) lösbar verbindbar ist,
**dadurch gekennzeichnet, dass**
der Lastaufnehmer (401, 501, 1001) ein Befestigungselement (450), ein Waagschalenelement (440, 540, 1040) und eine Einrastvorrichtung (460, 1060) zur lösbaren Aufnahme des Waagschalenelements (440, 540, 1040) am Befestigungselement (450) aufweist,
wobei die Einrastvorrichtung (460) ein Rastelement (461, 1061) und ein bei aufgenommenem Waagschalenelement (440, 540, 1040) in das Rastelement (461, 1061) eingreifendes Federelement (462) aufweist.

2. Gravimetrisches Messinstrument nach Anspruch 1, **dadurch gekennzeichnet, dass** das Rastelement (461, 1061) der Einrastvorrichtung (460, 1060) im gebrauchsbereiten Zustand entweder an einer dem Befestigungselement (450) zugewandten Seite (441, 1040) des Waagschalenelements (440, 540, 1040) oder an einer im Wesentlichen zylindrischen Fläche (453, 953) des Befestigungselements (450) und das Federelement (462) der Einrastvorrichtung (460, 1060) entsprechend gegenüberliegend an der im Wesentlichen zylindrischen Fläche (453, 953) des Befestigungselements (450) oder an einer dem Befestigungselement (450) zugewandten Seite (441, 1040) des Waagschalenelements (440, 540, 1040) angeordnet ist.

3. Gravimetrisches Messinstrument nach Anspruch 1 oder 2, **dadurch gekennzeichnet, dass** das Befestigungselement (450) ein erstes Befestigungsteil (551) und ein vom ersten Befestigungsteil (551) lösbares zweites Befestigungsteil (552) umfasst, wobei das erste Befestigungsteil (551) am Lastübertragungsglied (108) angeordnet ist und das Rastelement (461, 1061) oder das Federelement (462) an einer im Wesentlichen zylindrischen Fläche (453, 953) des zweiten Befestigungsteils (552) angeordnet ist.

4. Gravimetrisches Messinstrument nach Anspruch 1 oder 2, **dadurch gekennzeichnet, dass** das Befestigungselement (450) ein erstes Befestigungsteil (551) und ein vom ersten Befestigungsteil (551) lösbares zweites Befestigungsteil (552) umfasst, wobei das erste Befestigungsteil (551) am Lastübertragungsglied (108) angeordnet ist und das Rastelement (461, 1061) oder das Federelement (462) an einer im Wesentlichen zylindrischen Fläche des ersten Befestigungsteils (551) angeordnet ist.

5. Gravimetrisches Messinstrument nach Anspruch 3 oder 4, **dadurch gekennzeichnet, dass** zwischen dem ersten Befestigungsteil (551) und dem zweiten Befestigungsteil (552) mindestens eine, insbesondere aus dünner Metallfolie hergestellte, Unterlagscheibe (570) anordenbar ist, mittels welcher der relative Abstand zwischen einer die Messkraft aufnehmende Messauflagefläche (112) des Waagschalenelementes (540) und einer mit dem Untergrund in Kontakt bringbare Montagefläche (114) des gravimetrischen Messinstruments (10) einstellbar ist.

6. Gravimetrisches Messinstrument nach einem der Ansprüche 3 bis 5, **dadurch gekennzeichnet, dass** das zweite Befestigungsteil (552) mindestens zwei Langlöcher (954) aufweist, welche sich über nicht verbundene Kreissegmente erstrecken und durch welche zur Befestigung des zweiten Befestigungsteils (552) am ersten Befestigungsteil (551) ein Befestigungsmittel (555) hindurch geführt ist, und mittels welcher ein relativer Winkel zwischen dem Waagschalenelement (540) und dem Gehäuse (103) des gravimetrischen Messinstruments (10) um die Längsachse des Lastübertragungsglied (108) einstellbar ist.

7. Gravimetrisches Messinstrument nach einem der Ansprüche 1 bis 6, **dadurch gekennzeichnet, dass** das Waagschalenelement (440, 1040) und das Befestigungselement (450) oder das Waagschalenelement (540) und das erste Befestigungsteil (551) des Befestigungselements (450) oder das Waagschalenelement (540) und das zweite Befestigungsteil (552) des Befestigungselements (450) zur präzisen Ausrichtung zueinander Positionierungselemente (742, 956) aufweisen.

8. Gravimetrisches Messinstrument nach einem der Ansprüche 3 bis 7, **dadurch gekennzeichnet, dass** das Befestigungselement (450), oder das erste Befestigungsteil (551) des Befestigungselements (450) und/oder das zweite Befestigungsteil (552) des Befestigungselements (450) ein Material mit geringer Wärmeleitfähigkeit aufweist, insbesondere einen Kunststoff oder ein keramisches Material oder Chromstahl.

9. Gravimetrisches Messinstrument nach einem der Ansprüche 1 bis 8, **dadurch gekennzeichnet, dass** das Waagschalenelement (440, 540, 1040) und das Lastübertragungsglied (108) vorzugsweise aus elektrisch leitfähigem Material gefertigt sind und zwischen dem Waagschalenelement (440, 540, 1040) und dem Lastübertragungsglied (108) eine elektrisch leitfähige Verbindung angeordnet ist.

10. Gravimetrisches Messinstrument nach einem der Ansprüche 1 bis 9, **dadurch gekennzeichnet, dass** das Federelement (462) der Einrastvorrichtung (460, 1060) zur Aufbringung von Reibungskräften und radialen Federkräften durch Verformung bei der Aufnahme in einem als Einrastnut (463, 1063) ausgebildetem Rastelement (461, 1061) als Ringfeder (862) oder als Fingerfederring (1062) ausgestaltet ist.

11. Gravimetrisches Messinstrument nach Anspruch 10 **dadurch gekennzeichnet, dass** die Ringfeder (862) am Befestigungselement (450) oder am ersten Befestigungsteil (551) des Befestigungselements (450) oder am zweiten Befestigungsteil (552) des Befestigungselements (450) in einer auf der im Wesentlichen zylindrischen Fläche (453, 953) des Befestigungselements (450) oder des ersten Befestigungsteil (551) oder des zweiten Befestigungsteils (552) angeordneten Ringführungsnut (957) angeordnet ist.

12. Gravimetrisches Messinstrument nach einem der Ansprüche 10 oder 11, **dadurch gekennzeichnet, dass** die Einrastnut (463, 1063) am Grund einer bei aufgenommenem Waagschalenelement (440, 540, 1040) die Fläche (453) des Befestigungselements (450) oder die Fläche (953) des ersten Befestigungsteils (551) des Befestigungselements (450) oder zweiten Befestigungsteils (552) des Befestigungselements (450) umgebende Vertiefung (643) des Waagschalenelements (440, 540, 1040) als radiale Innennut ausgebildet ist oder als ein den Durchmesser der Vertiefung (643) verringerndes Überwindungselement (645) ausgebildet ist.

13. Gravimetrisches Messinstrument nach einem der Ansprüche 10 bis 12, **dadurch gekennzeichnet, dass** die annähernd kreisförmige Ringfeder (862) eine radial nach außen gerichtete Außenfläche (801), eine radial nach innen gerichtete Innenfläche (802) und zwei entgegengesetzt gerichtete Seitenflächen (803A, 803B) aufweist, wobei die Seitenflächen (803A, 803B) die Außenfläche (801) und die Innenfläche (802) beidseitig verbinden, und wobei die Außenfläche (801) und/oder die Innenfläche (802) zumindest abschnittsweise einen unterschiedlichen Durchmesser (D_{801A}, D_{801B}, D_{802A}, D_{802B}) aufweist.

14. Gravimetrisches Messinstrument nach einem der Ansprüche 10 bis 12, **dadurch gekennzeichnet, dass** der annähernd kreisförmige Fingerfederring (1062) ein die Fläche (453) umschliessendes Blech mit Einschnitten zur verbesserten Einfederung aufweist.

15. Gravimetrisches Messinstrument nach einem der Ansprüche 1 bis 11, **dadurch gekennzeichnet, dass** zwischen dem Gehäuse (103) und dem Lastaufnehmer (401, 501, 1001) ein berührungsfreies Dichtungssystem (413) angeordnet ist.

## Claims

1. Gravimetric measuring instrument (10) with a housing (103) and a weighing cell (120) that is arranged inside the housing (103), wherein the gravimetric measuring instrument (10) further comprises a load-transmitting member (108) which reaches through a passage opening (111) of the housing (103) and to which a load receiver (401, 501, 1001) is releasably connectable,
**characterized in that**
the load receiver (401, 501, 1001) comprises a fastening element (450), a weighing pan element (440, 540, 1040) and a snap-locking device (460, 1060) for the releasable seating of the weighing pan element (440, 540, 1040) on the fastening element (450),
wherein the snap-locking device (460) comprises a detent element (461, 1061) and a spring element (462) which engages the detent element (461, 1061) when the weighing pan element (440, 540, 1040) is seated in place.

2. Gravimetric measuring instrument according to claim 1, **characterized in that** the detent element (461, 1061) of the snap-locking device (460, 1060) is arranged either on a side (441, 1041) of the weighing pan element (440, 540, 1040) facing towards the fastening element (450) or on an essentially cylindrical surface (453, 953) of the fastening element (450), while the spring element (462) of the snap-locking device (460, 1060) is arranged at the respective opposite location, i.e. at the essentially cylindrical surface (453, 953) of the fastening element (450) or on a side (441, 1041) of the weighing pan element (440, 540, 1040) that faces towards the fastening element (450).

3. Gravimetric measuring instrument according to claim 1 or 2, **characterized in that** the fastening element (450) comprises a first fastening part (551) and a second fastening part (552) that can be released from the first fastening part (551), wherein the first fastening part (551) is arranged on the load-transmitting member (108), while the detent element (461, 1061) or the spring element (462) is arranged on an essentially cylindrical surface (453, 953) of the second fastening part (552).

4. Gravimetric measuring instrument according to claim 1 or 2, **characterized in that** the fastening element (450) comprises a first fastening part (551) and a second fastening part (552) that can be released from the first fastening part (551), wherein the first fastening part (551) is arranged on the load-transmitting member (108), while the detent element (461, 1061) or the spring element (462) is arranged on an essentially cylindrical surface of the first fastening part (551).

5. Gravimetric measuring instrument according to claim 3 or 4, **characterized in that** at least one shim disk (570), made in particular of thin metal foil material, can be arranged between the first fastening part (551) and the second fastening part (552), said at least one shim disk serving to set the relative distance between a receiving surface (112) for the measured object on the weighing pan (540) and a mounting surface (114) through which the gravimetric measuring instrument (10) can be brought into contact with an understructure.

6. Gravimetric measuring instrument according to one of the claims 3 to 5, **characterized in that** the second fastening part (552) has at least two elongated holes (954) which extend over non-connected circular segments, wherein a fastening means (555) is passed through the elongated holes to fasten the second fastening part (552) to the first fastening part (551), and wherein by means of the elongated holes a relative angle can be set between the weighing pan element (540) and the housing (103) of the gravimetric measuring instrument (10) about the longitudinal axis of the load-transmitting member (108).

7. Gravimetric measuring instrument according to one of the claims 1 to 6, **characterized in that**, for the precise alignment relative to each other, the weighing pan element (440, 1040) and the fastening element (450), or the weighing pan element (540) and the first fastening part (551) of the fastening element (450), or the weighing pan element (540) and the second fastening part (552) of the fastening element (450) comprise positioning elements (742, 956).

8. Gravimetric measuring instrument according to one of the claims 3 to 7, **characterized in that** the fastening element (450), or the first fastening part (551) of the fastening element (450) and/or the second fastening part (552) of the fastening element (450) comprise a material of low thermal conductivity, specifically a polymer plastic material or a ceramic material, or chromium steel.

9. Gravimetric measuring instrument according to one of the claims 1 to 8, **characterized in that** the weighing pan element (440, 540, 1040) and the load-transmitting member (108) are preferably made of an electrically conductive material and that an electrically conductive connection is arranged between the weighing pan element (440, 540, 1040) and the load-transmitting member (108).

10. Gravimetric measuring instrument according to one of the claims 1 to 9, **characterized in that** the spring element (462) of the snap-locking device (460, 1060), which serves to generate friction forces and radial spring forces as a result of elastic deformation caused by seating the spring element into a detent element (461, 1061) in the form of a detent groove (463, 1063), is configured as an annular spring (862) or as a fingered annular spring (1062).

11. Gravimetric measuring instrument according to claim 10, **characterized in that** the annular spring (862) is arranged on the fastening element (450) or on the first fastening part (551) of the fastening element (450) or on the second fastening part (552) of the fastening element (450) in a ring groove (957) which is arranged on the essentially cylindrical surface (453, 953) of the fastening element (450) or of the first fastening part (551) or of the second fastening element (552).

12. Gravimetric measuring instrument according to one of the claims 10 or 11, **characterized in that** the detent groove (463, 1063) is arranged at the bottom of a recess (643) of the weighing pan element (440, 540, 1040) which, when the weighing pan element (440, 540, 1040) is seated in place, surrounds the surface (453) of the fastening element (450) or the surface (953) of the first fastening part (551) of the fastening element (450) or of the second fasting part (552) of the fastening element (450) and is configured as a radially recessed internal groove or as a resistance bump (645) which locally constricts the diameter of the recess (643).

13. Gravimetric measuring instrument according to one of the claims 10 to 12, **characterized in that** the approximately circular annular spring (862) has a radially outward-directed outside surface (801), a radially inward-directed inside surface (802) and two opposite-facing side surfaces (803A, 803B), wherein the side surfaces (803A, 803B) connect the outside surface and the inside surface to each other, and wherein the outside surface (801) and/or the inside surface (802) vary in their respective diameters (D_{801A}, D_{801B}, D_{802A}, D_{802B}) at least over sections of their circumference.

14. Gravimetric measuring instrument according to one of the claims 10 to 12, **characterized in that** the approximately circular annular spring (1062) comprises a sheet metal element that surrounds the surface (453) and has cutbacks designed to improve its elastic resilience.

15. Gravimetric measuring instrument according to one of the claims 1 to 11, **characterized in that** a contact-free sealing system (413) is arranged between the housing (103) and the load receiver (401, 501, 1001).

## Revendications

1. Instrument de mesure gravimétrique (10) avec un boîtier (103) et une cellule de pesage (120) disposée dans le boîtier (103), l'instrument de mesure gravimétrique (10) présentant en outre un organe de transmission de charge (108), lequel travers un passage (111) dans le boîtier (103) et auquel peut être relié de façon détachable un récepteur de charge (401, 501, 1001),
**caractérisé en ce que**
le récepteur de charge (401, 501, 1001) comporte un élément de fixation (450), un élément de plateau de pesée (440, 540, 1040) et un dispositif d'encliquetage (460, 1060) pour la réception libérable de l'élément de plateau de pesée (440, 540, 1040) sur l'élément de fixation (450),
dans lequel le dispositif d'encliquetage (460, 1060) comporte un élément d'encliquetage (461, 1061) et un élément de ressort (462) venant en prise dans l'élément d'encliquetage (461, 1061) lorsque l'élément de plateau de pesée (440, 540, 1040) est reçu.

2. Instrument de mesure gravimétrique selon la revendication 1, **caractérisé en ce que** dans l'état prêt à l'emploi, l'élément d'encliquetage (461, 1061) du dispositif d'encliquetage (460, 1060) est disposé soit sur un côté (441, 1040) de l'élément de plateau de pesée (440, 540, 1040) tourné vers l'élément de fixation (450), soit sur une surface essentiellement cylindrique (453, 953) de l'élément de fixation (450), et l'élément de ressort (462) du dispositif d'encliquetage (460, 1060) est disposé de façon correspondante du côté opposé sur la surface essentiellement cylindrique (453, 953) de l'élément de fixation (450) ou sur un côté (441, 1040) de l'élément de plateau de pesée (440, 540, 1040) tourné vers l'élément de fixation (450).

3. Instrument de mesure gravimétrique selon la revendication 1 ou 2, **caractérisé en ce que** l'élément de fixation (450) comporte une première pièce de fixation (551) et une deuxième pièce de fixation (552) détachable de la première pièce de fixation (551), dans lequel la première pièce de fixation (551) est disposée sur l'organe de transmission de charge (108) et l'élément d'encliquetage (461, 1061) ou l'élément de ressort (462) est disposé sur une surface essentiellement cylindrique (453, 953) de la deuxième pièce de fixation (552).

4. Instrument de mesure gravimétrique selon la revendication 1 ou 2, **caractérisé en ce que** l'élément de fixation (450) comporte une première pièce de fixation (551) et une deuxième pièce de fixation (552) détachable de la première pièce de fixation (551), dans lequel la première pièce de fixation (551) est disposé sur l'organe de transmission de charge (108) et l'élément d'encliquetage (461, 1061) ou l'élément de ressort (462) est disposé sur une surface essentiellement cylindrique (453, 953) de la première pièce de fixation (551).

5. Instrument de mesure gravimétrique selon la revendication 3 ou 4, **caractérisé en ce qu'**au moins une rondelle (570), en particulier constituée d'une fine feuille métallique, peut être disposée entre la première pièce de fixation (551) et la deuxième pièce de fixation (552), laquelle permet de régler l'écart relatif entre une surface d'appui de mesure (112) de l'élément de plateau de pesée (540) recevant la force de mesure et une surface de montage (114) de l'instrument de mesure gravimétrique (10) susceptible d'être mise en contact avec le sol.

6. Instrument de mesure gravimétrique selon l'une des revendications 3 à 5, **caractérisé en ce que** la deuxième pièce de fixation (552) présente au moins deux trous oblongs (954) s'étendant sur des segments de cercle non reliés et à travers lesquels passe un moyen de fixation (555) pour la fixation de la deuxième pièce de fixation (552) à la première pièce de fixation (551), et au moyen desquels un angle relatif peut être réglé entre l'élément de plateau de pesée (540) et le boîtier (103) de l'instrument de mesure gravimétrique (10) autour de l'axe longitudinal de l'organe de transmission de charge (108).

7. Instrument de mesure gravimétrique selon l'une des revendications 1 à 6, **caractérisé en ce que** l'élément de plateau de pesée (440, 1040) et l'élément de fixation (450) ou l'élément de plateau de pesée (540) et la première pièce de fixation (551) de l'élément de fixation (450) ou l'élément de plateau de pesée (540) et la deuxième pièce de fixation (552) de l'élément de fixation (450) présentent des éléments de positionnement (742, 956) pour une orientation précise l'un par rapport à l'autre.

8. Instrument de mesure gravimétrique selon l'une des revendications 3 à 7, **caractérisé en ce que** l'élément de fixation (450) ou la première pièce de fixation (551) de l'élément de fixation (450) et/ou la deuxième pièce de fixation (552) de l'élément de fixation (450) présente un matériau avec une conductivité thermique inférieure, en particulier une matière plastique ou une matière céramique ou de l'acier chromé.

9. Instrument de mesure gravimétrique selon l'une des revendications 1 à 8, **caractérisé en ce que** l'élément de plateau de pesée (440, 540, 1040) et l'organe de transmission de charge (108) sont de préférence constitués d'un matériau électriquement conducteur, et une liaison électriquement conductrice est disposée entre l'élément de plateau de pesée (440, 540, 1040) et l'organe de transmission de charge (108).

10. Instrument de mesure gravimétrique selon l'une des revendications 1 à 9, **caractérisé en ce que** l'élément de ressort (462) du dispositif d'encliquetage (460, 1060) est conçu comme un ressort annulaire (862) ou comme une bague élastique (1062) permettant de produire des forces de friction et des forces de ressort radiales par déformation lors de l'admission dans un élément d'encliquetage (461, 1061) conçu comme une rainure d'encliquetage (463, 1063).

11. Instrument de mesure gravimétrique selon la revendication 10, **caractérisé en ce que** le ressort annulaire (862) est disposé sur l'élément de fixation (450) ou sur la première pièce de fixation (551) de l'élément de fixation (450) ou sur la deuxième pièce de fixation (552) de l'élément de fixation (450) dans une rainure de guidage annulaire (957) disposée sur la surface essentiellement cylindrique (453, 953) de l'élément de fixation (450) ou de la première pièce de fixation (551) ou de la deuxième pièce de fixation (552).

12. Instrument de mesure gravimétrique selon l'une des revendications 10 ou 11, **caractérisé en ce que** la rainure d'encliquetage (463, 1063) est conçue comme une rainure intérieure radiale au fond d'un renfoncement (643) de l'élément de plateau de pesée (440, 540, 1040) entourant la surface (453) de l'élément de fixation (450) ou la surface (953) de la première pièce de fixation (551) de l'élément de fixation (450) ou de la deuxième pièce de fixation (552) de l'élément de fixation (450) lorsque l'élément de plateau de pesée (440, 540, 1040) est reçu, ou comme un élément de dépassement (645) réduisant le diamètre du renfoncement (643).

13. Instrument de mesure gravimétrique selon l'une des revendications 10 à 12, **caractérisé en ce que** le ressort annulaire (862) approximativement circulaire présente une surface extérieure (801) orientée radialement vers l'extérieur, une surface intérieure (802) orientée radialement vers l'intérieur et deux surfaces latérales (803A, 803B) orientées de façon opposée, dans lequel les surfaces latérales (803A, 803B) relient la surface extérieure (801) et la surface intérieure (802) des deux côtés, et dans lequel la surface extérieure (801) et/ou la surface intérieure (802) présentent au moins par sections un diamètre différent (D_{801A}, D_{801B}, D_{802A}, D_{802B}).

14. Instrument de mesure gravimétrique selon l'une des revendications 10 à 12, **caractérisé en ce que** le ressort annulaire approximativement circulaire (1062) présente une tôle entourant la surface (453) avec des incisions pour une meilleure compression.

15. Instrument de mesure gravimétrique selon l'une des revendications 1 à 11, **caractérisé en ce qu'**un système d'étanchéité sans contact (413) est disposé entre le boîtier (103) et le récepteur de charge (401, 501, 1001).
